# EUROPEAN PATENT APPLICATION

(11) **EP 3 936 315 A1**
(43) Date of publication of application: **12.01.2022**
(21) Application number: 20771136.7
(22) Date of filing: 02.03.2020
(51) Int. Cl.: B29C 65/50, B29C 70/38

(54) **TAPE AFFIXING APPARATUS AND TAPE AFFIXING METHOD**

(30) Priority: 08.03.2019 JP 2019042638
(71) Applicant: Toray Engineering Co., Ltd., Tokyo 103-0028 (JP); Tokyo Institute of Technology, Tokyo 152-8550 (JP)
(72) Inventor: ATSUTA Naoyuki, Otsu-shi Shiga 5200842 (JP); IWADE Takashi, Otsu-shi Shiga 5200842 (JP); INAGAKI Jun, Otsu-shi Shiga 5200842 (JP); TAKEGAMI Toshifumi, Otsu-shi Shiga 5200842 (JP); TADANO Kotaro, Tokyo 1528550 (JP)
(74) Representative: EIP
(86) International application number: PCT/JP2020/008584
(87) International publication number: WO 2020/184237

(57) **Abstract**

A tape layup apparatus whereby the tape layup performance on a surface to be laid up can be enhanced is provided, the tape layup apparatus being an ATL apparatus 10 having an ATL head 20 for laying up with pressing a tape 1 on a laid-up surface 2a, the ATL head 20 equipped with a pressing part 30 to press the tape 1 on the laid-up surface 2a and a parallel linkage 40 to operate in a manner that allows a pressing position and/or a pressing attitude of the pressing part 30 to follow a form of the laid-up surface 2a.

## Description

### TECHNICAL FIELD

The present invention relates to a tape layup apparatus and a tape layup method, and more particularly, to a tape layup apparatus which is used when manufacturing fiber reinforced plastic (FRP) molded articles and the like by laying up a tape on a surface to be laid up, and a tape layup method using the apparatus.

### BACKGROUND ART

Methods for manufacturing a fiber reinforced plastic (FRP) molded article having a desired form by laying up a tape-formed material made of a fiber bundle such as carbon fibers previously impregnated with a resin (called a prepreg tape or a UD tape) on a surface to be laid up, are known.

They are variously called, such as ATL (Auto Tape Layup), ATW (Auto Tape Welding), or AFP (Auto Fiber Placement), but they are not strictly distinguished. In the present description, the methods wherein a tape is laid up with pressing on the laid-up surface are generically called ATL, and the apparatus (tape layup apparatus) is called an ATL apparatus.

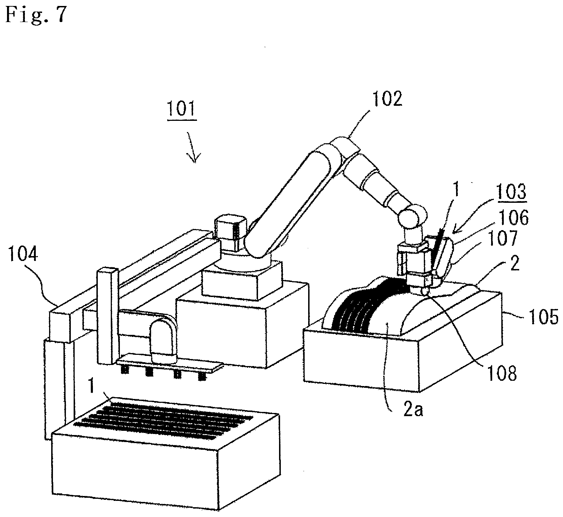

Fig. 7 is a perspective view showing an example of an ATL apparatus disclosed in the below-mentioned Patent Document 1.

An ATL apparatus 101 comprises an articulated robot 102, an ATL head 103 mounted on the tip of an arm of the articulated robot 102, a tape supply unit 104 to supply a tape 1 previously cut to the ATL head 103, and a work stage 105 on which a work 2 having a surface to be laid up 2a is placed.

The ATL head 103 comprises a feeder 106 to hold and carry the tape 1, a heating unit 107 to heat the tape 1 and/or the laid-up surface 2a, and a pressing roller 108 which lays up with pressing the tape 1 on the laid-up surface 2a of the work 2 with holding the tape 1 between the laid-up surface 2a thereof and itself.

The work 2 is, for example, an injection molded article made of a thermoplastic resin, and on the surface of the work 2, for example, the tape 1 impregnated with the same thermoplastic resin is laid up, so that the work 2 is reinforced.

### [Problems to Be Solved by the Invention]

The work 2 on which the tape 1 is to be laid up, has varied forms (three-dimensional forms). Therefore, in order to keep the pressing state of the pressing roller 108 on the tape 1 constant, it is desired that the ATL apparatus 101 controls the attitude (tilt) of the ATL head 103 so as to allow the pressing roller 108 to press the laid-up surface 2a of the work 2 through the tape 1 in the direction orthogonal (normal) to the laid-up surface 2a thereof.

For example, the attitude control of the ATL head 103 to the work 2 is conducted using coordinate data based on the three-dimensional design data of the work 2, and the like. However, the work 2 which is a molded article having a three-dimensional form often has a form error when compared to the design form/dimensions.

And the movement track of the articulated robot 102 is a track of movement between points in which with an end point selected, the movement is conducted from one point to another. Therefore, in some cases, an error is caused between the movement track of the pressing roller 108 of the ATL head 103 mounted on the tip of the arm of the articulated robot 102 and the form of the laid-up surface 2a of the work 2.

In the case of the work 2 having a form error like this, the conventional attitude control of the ATL head 103 sometimes generates portions in which the pressing roller 108 insufficiently presses the laid-up surface 2a, resulting in variations in the pressing state thereof. It is difficult to keep the pressing state of the pressing roller 108 on the laid-up surface 2a constant.

### Prior Art Document

### Patent Document

Patent Document 1: Japanese Patent Application Laid-Open Publication No. 2018-149730

### SUMMARY OF THE INVENTION

### Solution to problem and Advantageous Effect of Invention

The present invention was developed in order to solve the above problem, and it is an object of the present invention to provide a tape layup apparatus and a tape layup method, which make it possible to keep the pressing state of a pressing part on a surface to be laid up of a work constant even when the work has a form error, so as to enhance the tape layup performance on the laid-up surface thereof.

In order to achieve the above object, a tape layup apparatus according to a first aspect of the present invention is characterized by comprising a layup head for laying up with pressing a tape on a surface to be laid up, the layup head comprising:
a pressing part to press the tape on the surface to be laid up; and
a parallel linkage to operate in a manner that allows a pressing position and/or a pressing attitude of the pressing part to follow a form of the surface to be laid up.

Using the tape layup apparatus according to the first aspect of the present invention, since the layup head has the parallel linkage, it becomes possible to operate the layup head in such a manner that the pressing position and/or the pressing attitude of the pressing part follows the form of the laid-up surface. Consequently, even when the work subjected to the layup has a form error, it becomes possible to keep the pressing state of the pressing part on the laid-up surface thereof constant, so as to enhance the tape layup performance on the laid-up surface thereof.

The tape layup apparatus according to a second aspect of the present invention is characterized by the parallel linkage comprising:
a base part;
an end part to which the pressing part is attached; and
a plurality of link parts arranged in parallel between the base part and the end part, each of the link parts having
adjustable joints at both ends, and
an actuator installed between the adjustable joints, wherein
by individually controlling the length of each of the plurality of link parts using the actuator, the parallel linkage operates in a manner that allows the pressing position and/or the pressing attitude of the pressing part to follow the form of the surface to be laid up, in the tape layup apparatus according to the first aspect of the present invention.

Using the tape layup apparatus according to the second aspect of the present invention, by individually controlling the length of each of the plurality of link parts constituting the parallel linkage by the actuator, it becomes possible to operate the parallel linkage with high accuracy in such a manner that the pressing position and/or the pressing attitude of the pressing part follows the form of the laid-up surface. And since the actuator adjusts the length, which is of a so-called direct acting type, the space for the parallel linkage can be saved, so that a layup head with a high degree of freedom can be realized without being bulky.

The tape layup apparatus according to a third aspect of the present invention is characterized by the pressing part comprising:
a pressing roller to press the tape; and
a roller support part attached to the end part in a state of supporting the pressing roller, and the layup head further comprising:
   at least one of a tape feeder to feed the tape and a heating unit to heat the tape and/or the surface to be laid up, wherein
   on the roller support part, at least one of the tape feeder and the heating unit is mounted into a single unit, in the tape layup apparatus according to the second aspect of the present invention.

Using the tape layup apparatus according to the third aspect of the present invention, the pressing roller is attached to the end part of the parallel linkage through the roller support part, on which at least one of the tape feeder and the heating unit is mounted into a single unit. Consequently, in the state of combining the pressing roller with at least one of the tape feeder and the heating unit into a single unit, the pressing roller can be moved in a manner that follows the form of the laid-up surface. With the pressing operation by the pressing part, the feeding operation of the tape by the tape feeder and the heating operation of the tape and/or the laid-up surface by the heating unit can be conducted in a fixed condition.

The tape layup apparatus according to a fourth aspect of the present invention is characterized by the layup head further comprising:
a rotating member rotatably attached to the pressing part, which makes it possible to adjust a feed angle of the tape to the surface to be laid up; and
a rotating motion unit attached to the parallel linkage, which suspends the rotating member in a manner that enables the rotating member to conduct a rotating motion, in the tape layup apparatus according to the first aspect of the present invention.

Using the tape layup apparatus according to the fourth aspect of the present invention, by rotating the rotating member in the state in which the rotating motion unit suspends the rotating member, it is possible to adjust the feed angle in such a manner that the tape is fed at a fixed angle to the laid-up surface. Consequently, the control processing for adjusting the feed angle of the tape by the operation of the parallel linkage can be omitted or reduced, resulting in simplified control processing of the parallel linkage. And even when the rotating member is a member greatly overhanging in the direction from which the tape is fed, for example, since the rotating member is suspended by the rotating motion unit, the unbalanced weight of the layup head can be reduced, leading to an improvement of weight balance. Furthermore, the rotating motion unit takes the load of the moment generated when rotating the rotating member, so that the moment the load of which the parallel linkage takes can be substantially reduced. Therefore, the response property of control in which the pressing part is operated by the parallel linkage in a manner that follows the form of the laid-up surface can be enhanced, so that the tape layup performance on the laid-up surface can be further enhanced.

The tape layup apparatus according to a fifth aspect of the present invention is characterized by the parallel linkage comprising:
a base part;
an end part to which the pressing part is attached; and
a plurality of link parts arranged in parallel between the base part and the end part, each of the link parts having
adjustable joints at both ends, and
an actuator installed between the adjustable joints, wherein
the rotating motion unit is arranged on the end part, and
by individually controlling the length of each of the plurality of link parts using the actuator, the parallel linkage operates in a manner that allows the pressing position and/or the pressing attitude of the pressing part to follow the form of the surface to be laid up, in the tape layup apparatus according to the fourth aspect of the present invention.

Using the tape layup apparatus according to the fifth aspect of the present invention, by individually controlling the length of each of the plurality of link parts constituting the parallel linkage by the actuator, it becomes possible to operate the parallel linkage with high accuracy in such a manner that the pressing position and/or the pressing attitude of the pressing part follows the form of the laid-up surface. And since the actuator adjusts the length, which is of a so-called direct acting type, the space for the parallel linkage can be saved, so that a layup head with a high degree of freedom can be realized without being bulky. And since the rotating motion unit is arranged on the end part, it is possible not to lose the weight balance of the parallel linkage, so that the high operation accuracy of the parallel linkage can be maintained.

The tape layup apparatus according to a sixth aspect of the present invention is characterized by the rotating motion unit comprising:
a linear motion unit arranged on the end part, directed toward the base part; and
a link arm, both ends of which are rotatably attached between a linear motion member linearly moved by the linear motion unit and the rotating member, wherein
a linear motion of the linear motion member by the linear motion unit is converted to a rotating motion of the rotating member through the link arm, in the tape layup apparatus according to the fifth aspect of the present invention.

Using the tape layup apparatus according to the sixth aspect of the present invention, since the rotating motion unit consists of the linear motion unit and the link arm, it is possible to arrange the rotating motion unit out of the way of operations of the parallel linkage in the limited space on the end part, and to allow the rotating motion unit to have an unbulky compact configuration. And since the linear motion of the linear motion member by the linear motion unit is converted to the rotating motion of the rotating member through the link arm, it is possible to allow the rotating member to conduct a rotating motion with a good response property according to the linear motion of the linear motion member, and to adjust the feed angle of the tape according to the form of the laid-up surface with high accuracy.

The tape layup apparatus according to a seventh aspect of the present invention is characterized by the pressing part comprising:
a pressing roller to press the tape; and
a roller support part attached to the end part in a state of supporting the pressing roller, and the layup head further comprising:
   at least one of a tape feeder to feed the tape and a heating unit to heat the tape and/or the surface to be laid up, wherein
   on the rotating member, at least one of the tape feeder and the heating unit is mounted, and
   the pressing roller and the rotating member are arranged in such a manner that the center of rotation of the pressing roller and the center of rotating motion of the rotating member agree with each other, in the tape layup apparatus according to the fifth or sixth aspect of the present invention.

Using the tape layup apparatus according to the seventh aspect of the present invention, even when at least one of the tape feeder and the heating unit is mounted on the rotating member, since the rotating member is suspended by the rotating motion unit, the unbalanced weight of the layup head can be reduced, leading to an improvement of weight balance. And the response property of control in which the pressing part is operated by the parallel linkage in a manner that follows the form of the laid-up surface can be enhanced.

In addition, since the pressing roller and the rotating member are arranged in such a manner that the center of rotation of the pressing roller and the center of rotating motion of the rotating member agree with each other, it is possible to enhance the operation accuracy with which the feed angle of the tape is adjusted to a prescribed angle with following the form of the laid-up surface.

The tape layup apparatus according to an eighth aspect of the present invention is characterized by the actuator, being an air cylinder driven by air pressure in the tape layup apparatus according to any one of the second, third, and fifth through seventh aspects of the present invention.

Using the tape layup apparatus according to the eighth aspect of the present invention, since the actuator is an air cylinder, it has a configuration wherein the force in pressing the pressing part on the laid-up surface is easily absorbed or relieved, that is, it is configured to exhibit a so-called compliance characteristic (pressing operation having passive smoothness and softness), compared to other types of cylinders (such as a hydraulic cylinder or an electrically powered cylinder). Consequently, even when the laid-up surface has a form error, the effect of absorbing the form error can be enhanced, so that it becomes possible to more smoothly conduct the operation of allowing the pressing position and/or the pressing attitude of the pressing part to follow the form of the laid-up surface.

The tape layup apparatus according to a ninth aspect of the present invention is characterized by the air cylinder comprising:
a cylinder part to which air is supplied;
a rod part moving forward and rearward according to pressure in the cylinder part;
a pressure detecting part to detect a pressure in the cylinder part; and
a displacement detecting part to detect a displacement of the rod part, wherein
the pressure in the cylinder part detected by the pressure detecting part and/or the displacement of the rod part detected by the displacement detecting part are controlled so as to allow the pressing position and/or the pressing attitude of the pressing part to follow the form of the surface to be laid up, in the tape layup apparatus according to the eighth aspect of the present invention.

Using the tape layup apparatus according to the ninth aspect of the present invention, it becomes possible to enhance the response property of length control of each of the plurality of link parts, so that the response property of the operation of allowing the pressing position and/or the pressing attitude of the pressing part to follow the form of the laid-up surface can be enhanced.

The tape layup apparatus according to a tenth aspect of the present invention is characterized by the base part of the parallel linkage mounted on a gantry, in the tape layup apparatus according to any one of the second, third, and fifth through ninth aspects of the present invention.

Using the tape layup apparatus according to the tenth aspect of the present invention, since the base part of the parallel linkage is mounted on a gantry, the control of the linear motion of the layup head (such as motion control in the directions of X, Y, and Z axes) can be stably conducted by the gantry. By combining the stable control of the linear motion with the control of the parallel linkage, the operation of correctly controlling the pressing position and/or the pressing attitude of the pressing part in a manner that follows the form of the laid-up surface can be easily realized.

The tape layup apparatus according to an eleventh aspect of the present invention is characterized by the gantry comprising:
an X-axis linear motion mechanism for moving a work having the surface to be laid up in an X-axis direction;
a Y-axis linear motion mechanism built in a Y-axis direction over the X-axis linear motion mechanism; and
a Z-axis linear motion mechanism supported by the Y-axis linear motion mechanism, having a layup head mounting part movable in a Z-axis direction, wherein
an X *θ* z-axis stage supporting the work rotatably in a yaw ( *θ* z) direction is mounted on the X-axis linear motion mechanism,
the layup head is mounted on the layup head mounting part, and
the parallel linkage enables the pressing part to rotate at least in a roll ( *θ* y) direction and in a pitch ( *θ* x) direction, in the tape layup apparatus according to the tenth aspect of the present invention.

Using the tape layup apparatus according to the eleventh aspect of the present invention, since the gantry has linear motion mechanisms each in the directions of X, Y, and Z axes, the X *θ* z-axis stage rotating in the yaw ( *θ* z) direction is mounted on the X-axis linear motion mechanism, and the parallel linkage is configured to enable the pressing part to rotate at least in the roll ( *θ* y) direction and in the pitch ( *θ* x) direction, the configuration of the parallel linkage can be simplified.

The tape layup apparatus according to a twelfth aspect of the present invention is characterized by the base part of the parallel linkage mounted on an articulated robot in the tape layup apparatus according to any one of the second, third, and fifth through ninth aspects of the present invention.

Using the tape layup apparatus according to the twelfth aspect of the present invention, since the base part of the parallel linkage is mounted on an articulated robot, the positioning accuracy of the articulated robot can be complemented by the parallel linkage of the layup head, resulting in enhanced layup performance of the tape on the laid-up surface.

A tape layup method according to a first aspect of the present invention is characterized by being a method for laying up the tape on the surface to be laid up using the tape layup apparatus according to any one of the first through twelfth aspects of the present invention, wherein
the tape is laid up on the surface to be laid up with controlling the parallel linkage in a manner that allows the pressing position and/or the pressing attitude of the pressing part to follow the form of the surface to be laid up.

Using the tape layup method according to the first aspect of the present invention, it is possible to lay up the tape on the laid-up surface with controlling the parallel linkage in such a manner that the pressing position and/or the pressing attitude of the pressing part follows the form of the laid-up surface. Consequently, even when the work subjected to the layup has a form error, the pressing state of the pressing part on the laid-up surface can be kept constant, resulting in enhanced tape layup performance on the laid-up surface.

The tape layup method according to a second aspect of the present invention is characterized by being a method for laying up the tape on the surface to be laid up using the tape layup apparatus according to any one of the fourth through seventh aspects of the present invention, wherein
while rotating the rotating member by the rotating motion unit so as to allow a feed angle of the tape to the surface to be laid up to be a prescribed angle,
the tape is laid up on the surface to be laid up with controlling the parallel linkage in a manner that allows the pressing position and/or the pressing attitude of the pressing part to follow the form of the surface to be laid up.

Using the tape layup method according to the second aspect of the present invention, by rotating the rotating member by the rotating motion unit, the tape can be fed at a prescribed angle to the laid-up surface. By the control of the parallel linkage, even when the work subjected to the layup has a form error, the pressing state of the pressing part on the laid-up surface can be kept constant. And by controlling the rotating motion unit and the parallel linkage in a coordinated manner, the response property of control in which the pressing part is operated in a manner that follows the form of the laid-up surface can be enhanced, resulting in further enhanced tape layup performance on the laid-up surface.

### BRIEF DESCRIPTION OF DRAWINGS

Fig. 1 is a schematic view showing a configuration example of an ATL head in an ATL apparatus according to a first embodiment of the present invention;
Fig. 2 is an overall perspective view showing a concrete configuration example of the ATL apparatus according to the first embodiment;
Fig. 3 is an enlarged perspective view of the periphery of the ATL head in the ATL apparatus according to the first embodiment;
Fig. 4 is a flowchart showing an example of a layup processing operation conducted by a robot controlling part and an ATL head controlling part in the ATL apparatus according to the first embodiment;
Fig. 5 is a schematic view showing a configuration example of an ATL head in an ATL apparatus according to a second embodiment;
Fig. 6 is a flowchart showing an example of a layup processing operation conducted by a robot controlling part and an ATL head controlling part in the ATL apparatus according to the second embodiment; and
Fig. 7 is a perspective view showing an example of a conventional ATL apparatus.

### Description of Embodiments

The preferred embodiments of the tape layup apparatus and the tape layup method according to the present invention are described below by reference to the Figures.

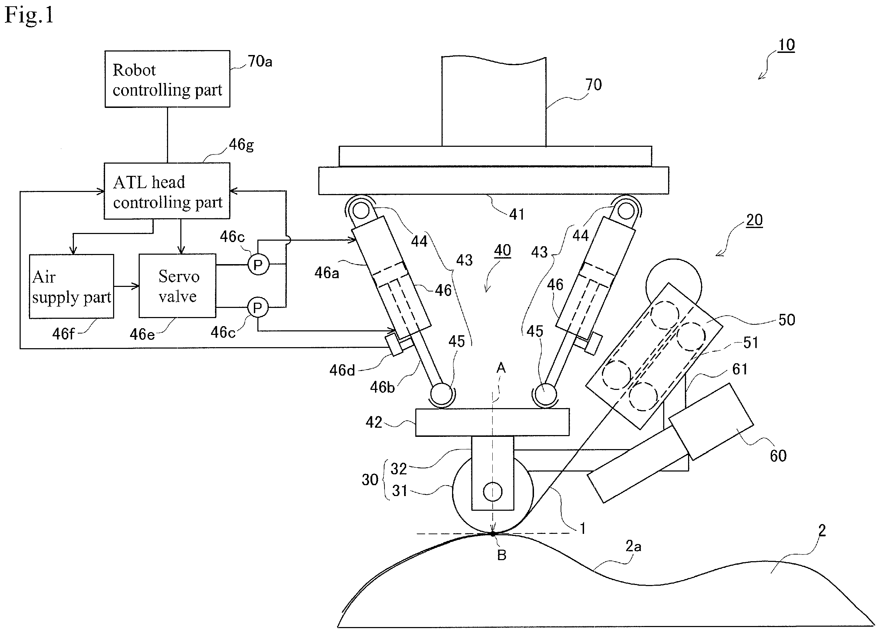

Fig. 1 is a schematic view showing a configuration example of an ATL head in an ATL apparatus according to a first embodiment. The ATL apparatus is an example of the tape layup apparatus according to the present invention, and the ATL head is an example of the layup head.

An ATL apparatus 10 is an apparatus for manufacturing a molded article reinforced with a tape 1 by laying up the tape 1 on a work 2, having an ATL head 20 for laying up with pressing the tape 1 on a surface to be laid up 2a of the work 2.

The ATL head 20 is mounted on a handling robot 70. The handling robot 70 may consist of a general-purpose industrial robot, for example, a gantry (also called an orthogonal coordinate mechanism), or an articulated robot (also called a serial articulated mechanism). The handling robot 70 is preferably equipped with a mechanism which can translate the ATL head 20 at least in the directions of X, Y, and Z axes (three degrees of freedom). The operation control of the handling robot 70 is conducted by a robot controlling part 70a. In the robot controlling part 70a, three-dimensional coordinate data of the laid-up surface 2a of the work 2, programs for controlling operations of each part based on the three-dimensional coordinate data thereof, and the like are stored, and these are used for controlling the position and attitude of the ATL head 20. The robot controlling part 70a may consist of a general-purpose computer.

The work 2 is, for example, a molded article having a three-dimensional form, and may be a molded article made of a resin such as a thermoplastic resin or a thermosetting resin, or a molded article made of a metal.

As the tape 1, for example, a material impregnated with a thermoplastic resin (also called a UD tape), or a material impregnated with a thermosetting resin (also called a prepreg tape), which are tape-formed materials made of a fiber bundle at least part of which is previously impregnated with a resin, can be used. The tape 1 may contain carbon fibers, or may be a resin tape with a large number of short fibers mixed therein. The type of the tape 1 can be selected as appropriate according to the material properties of the work 2 and the like. The tape 1 may has the form in which multiple tapes are placed in parallel.

The ATL head 20 has a pressing part 30 which presses the tape 1 on the laid-up surface 2a of the work 2, and a parallel linkage 40 which operates in a manner that allows the pressing position and/or the pressing attitude of the pressing part 30 to follow the form of the laid-up surface 2a.

The pressing part 30 has a pressing roller 31 to press the tape 1, and a roller support part 32 attached to an end part 42 of the parallel linkage 40 in the state of rotatably supporting the pressing roller 31. The pressing roller 31 can consist of a resin roller, an elastic roller, or a metallic roller according to the characteristics of the tape 1 or the material properties of the work 2. The size (diameter and width) of the pressing roller 31 can be selected as appropriate according to the type and size of the tape 1 to be used, and the type and shape of the work 2. Here, in another configuration example, a pressing member such as a pressing shoe may be used in place of the pressing roller 31.

The parallel linkage 40 has a base part 41 mounted on the handling robot 70, the end part 42 to which the pressing part 30 is attached, and a plurality of link parts 43 arranged in parallel between the base part 41 and the end part 42.

Each of the link parts 43 has adjustable joints 44 and 45 such as universal joints or spherical joints at both ends thereof, and an air cylinder 46 installed as an actuator between the adjustable joints 44 and 45. The parallel linkage 40 is configured to change the position (translation) and attitude (rotation) of the end part 42 by controlling the length of each of the plurality of link parts 43 using the air cylinder 46 thereof, so as to be able to operate in such a manner that the pressing position and/or the pressing attitude of the pressing roller 31 follows the form of the laid-up surface 2a.

As long as the parallel linkage 40 can operate in such a manner that the pressing position and/or the pressing attitude of the pressing roller 31 follows the form of the laid-up surface 2a, the number of the link parts 43 is not particularly defined, but generally, three to six link parts 43 may be used. When the number of the link parts 43 is reduced, the configuration of the parallel linkage 40 can be simplified. On the other hand, when the number of the link parts 43 is increased, the support force of parts attached to the end part 42 is enhanced, so that the parallel linkage 40 can be configured to be less affected by the moment generated by the operation thereof.

In consideration of the operation function (degree of freedom) of the handling robot 70, the degree of freedom of the parallel linkage 40 may be selected. In this case, the parallel linkage 40 which allows the pressing roller 31 to rotate at least in the roll direction and in the pitch direction is preferably adopted. Or regardless of the operation function of the handling robot 70, as the parallel linkage 40, a mechanism with six degrees of freedom, that is, a mechanism which allows the pressing roller 31 to move in six directions (translations in three directions and rotations in three directions) may be used.

The air cylinder 46 has a cylinder part 46a to which air is supplied, a rod part 46b moving forward and rearward according to pressure in the cylinder part 46a, a pressure sensor (pressure detecting part) 46c for detecting the pressure in the cylinder part 46a, and a displacement sensor (displacement detecting part) 46d for detecting the displacement of the rod part 46b. The air cylinder 46 preferably consists of a double-acting cylinder, but it is not limited to this.

The cylinder part 46a is connected through the pressure sensor 46c to a servo valve 46e. The servo valve 46e regulates the inflow rate of air into the cylinder part 46a and the discharge rate thereof so as to control the differential pressure in the two chambers of the cylinder part 46a. The servo valve 46e is connected to an air supply part 46f such as a compressor, which outputs compressed air.

As the displacement sensor 46d, anything can be adopted, as long as it can measure the amount of displacement of the rod part 46b. For example, it may be a magnetic linear encoder which detects the amount of displacement of the rod part 46b from the amount of magnetic displacement, or an optical linear encoder, or a potentiometer.

A pressure signal detected by the pressure sensor 46c and a displacement signal detected by the displacement sensor 46d each are output to an ATL head controlling part 46g. In the ATL head controlling part 46g, besides three-dimensional coordinate data of the laid-up surface 2a of the work 2, programs for controlling the operation of each part of the ATL head 20 on the basis of the three-dimensional coordinate data, pressure signal, displacement signal, and the like are stored.

The ATL head controlling part 46g performs the processing to control the operation of the servo valve 46e of each air cylinder 46, for example, using the detected signals acquired from the pressure sensor 46c and the displacement sensor 46d of each air cylinder 46 as control parameters, so as to control the pressure in the cylinder part 46a of each air cylinder 46 and/or the displacement of the rod part 46b thereof in a manner that allows the pressing position and/or the pressing attitude of the pressing roller 31 to follow the form of the laid-up surface 2a.

The ATL head controlling part 46g may be configured, for example, to calculate an index (an excess or a deficiency of pressure, or an excess or a deficiency of displacement) corresponding to a form error of the work 2, on the basis of the detected signals acquired from the pressure sensor 46c and the displacement sensor 46d of each air cylinder 46, so as to control the operation (pressure application operation or pressure reduction operation) of the servo valve 46e of each air cylinder 46 on the basis of the calculated index.

The ATL head controlling part 46g calculates the length (displacement) of the rod part 46b of each air cylinder 46 for realizing the target position and attitude of the end part 42 (that is, the position and attitude of the end part 42 for pressing the laid-up surface 2a by the pressing roller 31 in the direction orthogonal (normal) to the movement track based on the three-dimensional coordinate data of the work 2). And the ATL head controlling part 46g may store these calculated figures as a target figure of the length of the rod part 46b of each air cylinder 46, compare these stored target figures with output figures from the displacement sensor 46d of each air cylinder 46 in the layup operation, and conduct feedback control leading to the target figures. As the target figure, the length of the rod part 46b of each air cylinder 46 obtained by taking into account the form error of the work 2 may be selected.

The ATL head controlling part 46g may control each air cylinder 46 in a manner that moves the pressing roller 31 along a movement track designated based on the three-dimensional coordinate data of the work 2 obtained by taking into account the form error thereof, so as to press the laid-up surface 2a in the direction of the normal thereto.

By the above-described control of the parallel linkage 40 performed by the ATL head controlling part 46g, without forming a clearance between the pressing roller 31 and the tape 1, the operation in which the pressing roller 31 presses the laid-up surface 2a of the work 2 through the tape 1 in the direction orthogonal (normal) to the laid-up surface 2a thereof (direction A shown in Fig. 1) is realized. Here, the ATL head controlling part 46g may consist of a general-purpose computer.

In this configuration example, the actuator consists of the air cylinder 46 driven by air pressure, but the actuator adaptable to the present invention is not limited to the air cylinder 46. For example, a direct acting actuator such as a hydraulic cylinder or an electrically powered cylinder can be adapted.

The ATL head 20 is further equipped with a feeder (tape feeder) 50 to feed the tape 1 and a heating unit 60 which heats at least one of the tape 1 fed out of the feeder 50 to the pressing roller 31 and the laid-up surface 2a. The feeder 50 and the heating unit 60 are mounted on a mounting guide 61 fixed on the roller support part 32. Here, the heating unit 60 is not an essential requirement. In the cases where heating processing on the tape 1 and the like is not required, the ATL head 20 may not be equipped with the heating unit 60. Or by arranging an attaching part (not shown) of the heating unit 60 on the mounting guide 61, the heating unit 60 may be attachable to/detachable from the mounting guide 61. The operations of the feeder 50 and the heating unit 60 are controlled by the ATL head controlling part 46g.

The heating unit 60 is preferably able to heat the tape 1 and the laid-up surface 2a with no contact therewith. It may be configured to be, for example, a radiation light source such as an infrared lamp, a laser, and an IR lamp, or a hot air source such as a hot-air nozzle, or a combination of them.

The feeder 50 is configured, for example, to have a pair of feeding belts 51, which are rotated by the power of a motor not shown so as to feed the tape 1. Here, the feeder 50 may be configured to have a heater therein, by which the pair of feeding belts 51 are preheated to a prescribed temperature. By that, before the tape 1 arrives at a layup point (point B shown in Fig. 1), the tape 1 can be preheated.

The feeder 50 may have an unwinding mechanism (not shown) to unwind the tape 1 from a bobbin mounted thereon, or supply the tape 1 previously cut in a prescribed length. Or by unwinding the tape 1 from an unwinding mechanism (not shown) arranged separately from the ATL head 20, the tape 1 may be supplied along a conveyance route to the feeder 50.

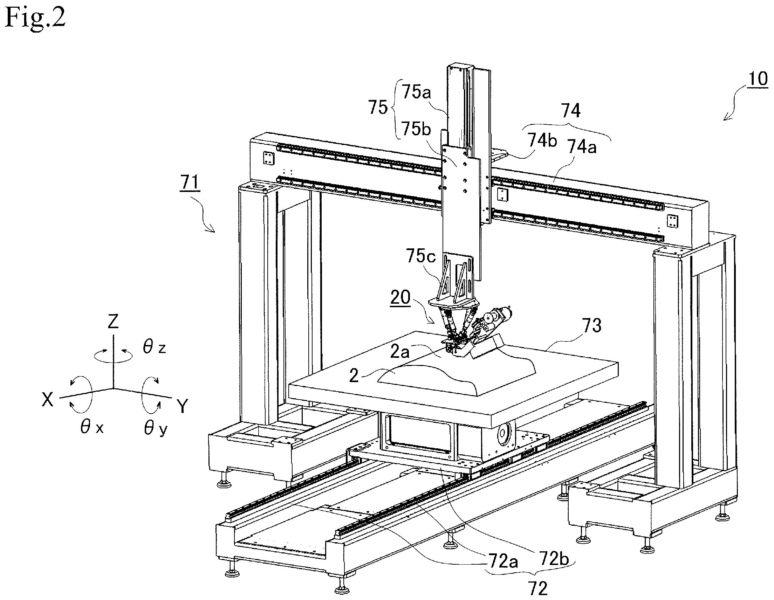

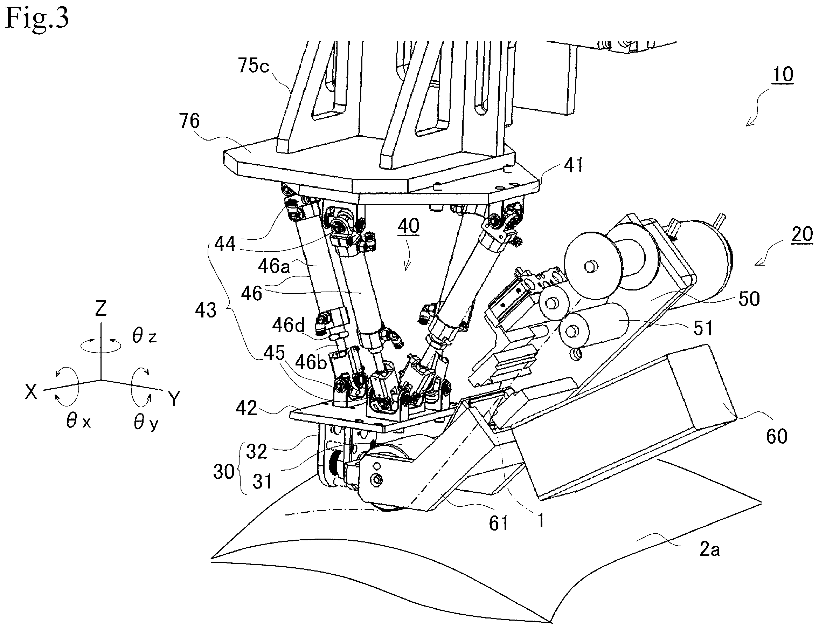

Fig. 2 is an overall perspective view showing a concrete configuration example of the ATL apparatus according to the first embodiment. Fig. 3 is an enlarged perspective view of the periphery of the ATL head in the ATL apparatus shown in Fig. 2. Components having the same functions as those of the ATL apparatus 10 shown in Fig. 1 are given the same reference signs, and they are not explained here.

In an ATL apparatus 10 shown in Figs. 2 and 3, a handling robot 70 on which an ATL head 20 is mounted consists of a gantry (an orthogonal coordinate mechanism) 71.

The fundamental configuration of the ATL head 20 shown in Figs. 2 and 3 are almost the same as the ATL head 20 shown in Fig. 1, but in the ATL head 20 shown in Figs. 2 and 3, a parallel linkage 40 comprises four link parts 43. In the below explanations, the direction in which a work 2 is moved is an X-axis direction, the direction orthogonal to the X-axis direction on the horizontal plane is a Y-axis direction, and the direction orthogonal to both of them is a Z-axis direction.

The gantry 71 has an X-axis linear motion mechanism 72 having an X *θ* z-axis stage 73 supporting the work 2 movably in the X-axis direction and rotatably in the yaw (*θ* z) direction (on the Z-axis), a Y-axis linear motion mechanism 74 built over the X-axis linear motion mechanism 72 in the Y-axis direction, and a Z-axis linear motion mechanism 75 supported by the Y-axis linear motion mechanism 74, which can move in the Z-axis direction.

The X-axis linear motion mechanism 72 comprises an X-axis guide part 72a, an X-axis slide table 72b slidably attached to the X-axis guide part 72a, and the X *θ* z-axis stage 73 rotatably in the yaw (*θ* z) direction mounted on the X-axis slide table 72b. The work 2 is placed on the X *θ* z-axis stage 73.

The Y-axis linear motion mechanism 74 comprises a Y-axis guide part 74a of an arch type and a Y-axis slider 74b slidably attached to the Y-axis guide part 74a.

The Z-axis linear motion mechanism 75 comprises a Z-axis guide part 75a attached to the Y-axis slider 74b, a Z-axis slider 75b slidably attached to the Z-axis guide part 75a, and a Z-axis bracket 75c attached to the Z-axis slider 75b. To the lower end part of the Z-axis bracket 75c, an ATL head mounting part 76 is attached, and on the ATL head mounting part 76, the ATL head 20 is mounted.

Then, an operation in which the ATL apparatus 10 lays up the tape 1 on the work 2 is explained below.

Concerning the layup operation of the tape 1 using the ATL apparatus 10, the translation movement of the work 2 in the X-axis direction is realized by the X-axis linear motion mechanism 72, while the Z-axis (yaw ( *θ* z) direction) rotation movement thereof is realized by the X *θ* z-axis stage 73. The translation movement of the ATL head 20 in the Y-axis direction is realized by the Y-axis linear motion mechanism 74, while the translation movement thereof in the Z-axis direction is realized by the Z-axis linear motion mechanism 75. And by the parallel linkage 40 of the ATL head 20, at least the Y-axis (roll (*θ* y) direction) rotation movement and X-axis (pitch ( *θ* x) direction) rotation movement of the pressing roller 31 are realized.

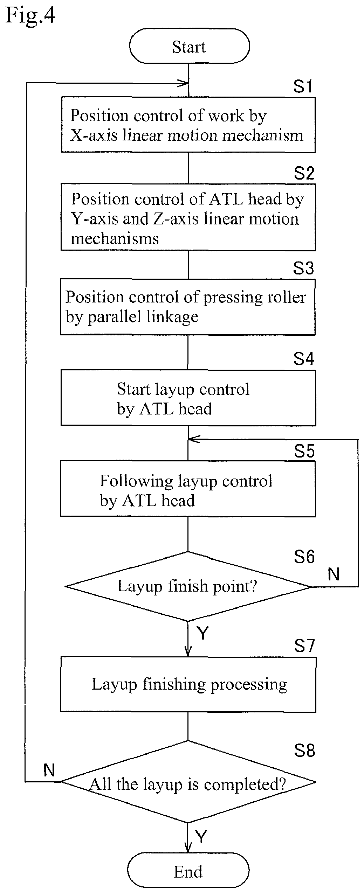

Fig. 4 is a flowchart showing an example of a layup processing operation conducted by the robot controlling part 70a and the ATL head controlling part 46g in the ATL apparatus 10 according to the first embodiment.

In step S1, the robot controlling part 70a operates the X-axis linear motion mechanism 72 of the gantry 71 so as to move the X *θ* z-axis stage 73 on which the work 2 is placed in the X-axis direction and conduct control for positioning the work 2 directly below the Y-axis guide part 74a of the Y-axis linear motion mechanism 74, and the processing goes to step S2.

In step S2, the robot controlling part 70a operates the Y-axis linear motion mechanism 74 and the Z-axis linear motion mechanism 75 of the gantry 71 so as to conduct control for moving the ATL head 20 to above the layup start point of the tape 1, and the processing goes to step S3.

In step S3, the ATL head controlling part 46g operates the parallel linkage 40 so as to conduct control for arranging the pressing roller 31 in the state of facing in the direction orthogonal (normal) to the laid-up surface 2a at the layup start point, and the processing goes to step S4.

In step S4, the ATL head controlling part 46g operates each part of the ATL head 20 so as to conduct processing of starting layup control of the tape 1. That is, the ATL head controlling part 46g operates the feeder 50 so as to feed the tape 1 to between the pressing roller 31 and the laid-up surface 2a. In addition, the ATL head controlling part 46g operates the parallel linkage 40 (as required, the gantry 71 may also be operated by the robot controlling part 70a) so as to start control of allowing the pressing roller 31 to press the tape 1 in the direction orthogonal to the laid-up surface 2a. Furthermore, the ATL head controlling part 46g starts heating processing by the heating unit 60 so as to start heating the tape 1 and/or the laid-up surface 2a, and the processing goes to step S5.

In step S5, the ATL head controlling part 46g conducts operation control of a pressing position and a pressing attitude of the pressing roller 31 by the parallel linkage 40 of the ATL head 20. The robot controlling part 70a conducts operation control of the gantry 71 (the Y-axis linear motion mechanism 74, Z-axis linear motion mechanism 75, or the rotation of the X *θ* z-axis stage 73). By the ATL head controlling part 46g and the robot controlling part 70a, the control of laying up the tape 1 on the laid-up surface 2a along a layup path of the tape 1 on the work 2 (following layup control) is conducted. At this time, the operation of the parallel linkage 40 is controlled in such a manner that the pressing position and/or the pressing attitude of the pressing roller 31 follows the form of the laid-up surface 2a of the work 2 (i.e., the pressing roller 31 presses in the direction of the normal thereto). The ATL head controlling part 46g also controls the operation of the feeder 50 in order to feed the tape 1.

In step S6, the ATL head controlling part 46g judges whether the pressing roller 31 of the ATL head 20 reached the layup finish point of the tape 1 or not. When it is judged that it has not reached the layup finish point thereof yet, the processing in step S5 is continued. On the other hand, when it is judged that it reached the layup finish point thereof, the processing goes to step S7.

In step S7, the ATL head controlling part 46g conducts layup finishing processing of the tape 1. That is, the ATL head controlling part 46g conducts control of cutting the tape 1 in a cutting part arranged in the feeder 50, stop control of the heating operation by the heating unit 60, and release control of the pressing operation by the pressing roller 31, so as to complete the layup of a roll (a line) of the tape 1.

In step S8, whether all the layup of the tape 1 on the laid-up surface 2a of the work 2 was completed or not is judged. When it is judged that all the layup has not been completed, the processing goes back to step S1, where the control of laying up the tape 1 side by side in sequence on the laid-up surface 2a of the work 2 is conducted. On the other hand, when it is judged that all the layup was completed, the processing is ended.

Here, in the above operation example, the operation of the ATL head 20 is controlled so as to allow the tape 1 to be laid up side by side in sequence on the laid-up surface 2a of the work 2, but the layup mode of the tape 1 on the laid-up surface 2a thereof is not limited to this. For example, in another operation example, according to the quality specification of the molded article, the layup may be conducted in the state of the tape 1 overlapping an adjacent tape 1 thereto, or in the state of adjacent tapes 1 not overlapping each other (apart from each other at established intervals).

As described above, the layup state such as an overlap of the tapes or a space between them is sometimes specified according to the quality of the molded article. When the pressing roller 31 cannot press the laid-up surface 2a in the direction normal thereto, leading to a deviation of the layup track of the pressing roller 31, for example, the overlap of the tapes 1 or the space therebetween is not stable, leading to a fear of damage to the quality of the molded article.

However, using the ATL apparatus 10 according to the first embodiment, by the layup operation with following the laid-up surface 2a, which is realized by the parallel linkage 40 of the ATL head 20, it becomes possible to certainly press the pressing roller 31 in the direction normal to the laid-up surface 2a. Therefore, even when adjacent tapes 1 are laid up in a manner that overlap each other, or even when adjacent tapes 1 are laid up in such a manner that they do not overlap each other, that is, are apart from each other at established intervals, it is possible to conduct stable layup with a fixed overlap of the tapes 1 or a fixed space therebetween, resulting in improved quality of the molded article with the tape 1 laid up thereon.

Since the tape 1 is, for example, an aggregate of fibers such as carbon fibers, when the tape 1 loses its cross-sectional form, there is a fear of badly affecting the quality of the molded article. For example, when the pressing roller 31 cannot be pressed in the direction of the normal, a force in a direction of the shaft of the pressing roller 31 is generated. As a result, there is a possibility that the fibers in the vicinity of the pressing roller contact surface of the tape 1 are displaced, so that the tape 1 loses its cross-sectional form.

However, using the ATL apparatus 10, since by the layup control with following the laid-up surface 2a by the parallel linkage 40 of the ATL head 20, it becomes possible to certainly press the pressing roller 31 in the direction normal to the laid-up surface 2a, there is no fear that the cross-sectional form of the tape 1 is broken by the pressing roller 31, so that it becomes possible to improve the quality of the molded article.

Using the ATL apparatus 10 according to the first embodiment, as described above, since the ATL head 20 has the parallel linkage 40, it becomes possible to operate the pressing roller 31 in such a manner that the pressing position and/or the pressing attitude of the pressing roller 31 follows the form of the laid-up surface 2a, in other words, the pressing operation in the direction normal to the laid-up surface 2a can be conducted, in the layup operation. Consequently, even when the work 2 has a form error, it becomes possible to keep the pressing state of the pressing roller 31 on the laid-up surface 2a constant, leading to enhanced layup performance of the tape 1 on the laid-up surface 2a. Here, the pressing direction by the pressing roller 31 is not limited to the direction of the normal to the laid-up surface 2a.

Using the ATL apparatus 10, by individually controlling the length of each of the plurality of link parts 43 constituting the parallel linkage 40 by the air cylinder 46, it becomes possible to operate the parallel linkage 40 with high accuracy in such a manner that the pressing position and/or the pressing attitude of the pressing roller 31 follows the form of the laid-up surface 2a. And since the air cylinder 46 is used as an actuator for adjusting the length, it is possible to save the space for the parallel linkage 40, and to realize the ATL head 20 equipped with a high degree of freedom without being bulky.

Using the ATL apparatus 10, since the air cylinder 46 is used as an actuator, it has a configuration wherein the force in pressing the pressing part 30 on the laid-up surface 2a is easily absorbed or relieved, that is, it is configured to exhibit a so-called compliance characteristic (pressing operation having passive smoothness and softness), compared to other types of cylinders (such as a hydraulic cylinder or an electrically powered cylinder). Consequently, even when the laid-up surface 2a has a form error, the effect of absorbing the form error can be enhanced, so that it becomes possible to more smoothly conduct the operation which allows the pressing position and/or the pressing attitude of the pressing roller 31 to follow the form of the laid-up surface 2a.

Using the ATL apparatus 10, by the ATL head controlling part 46g, the response property of length control of each air cylinder 46 constituting the plurality of link parts 43 can be enhanced, so that the response property of the operation which allows the pressing position and/or the pressing attitude of the pressing roller 31 to follow the form of the laid-up surface 2a can be enhanced.

In the ATL apparatus 10, the pressing roller 31 is attached through the roller support part 32 to the end part 42 of the parallel linkage 40, and on the roller support part 32, the feeder 50 and the heating unit 60 are mounted through the mounting guide 61. By this configuration, in the sate of combining the pressing roller 31, feeder 50, and heating unit 60 into a single unit, the pressing roller 31 can be moved in a manner that follows the form of the laid-up surface 2a. With the pressing operation by the pressing roller 31, the feeding operation of the tape 1 by the feeder 50 and the heating operation of the tape 1 and/or the laid-up surface 2a by the heating unit 60 can be conducted in a fixed condition.

Using the ATL apparatus 10, since the base part 41 of the parallel linkage 40 is mounted on the gantry 71, the movement control of the ATL head 20 in the directions of X, Y, and Z axes can be stably conducted by the gantry 71. And by combining the stable control of the linear movement with the control of the parallel linkage 40, the operation of correctly controlling the pressing position and/or the pressing attitude of the pressing roller 31 of the ATL head 20 in a manner that follows the form of the laid-up surface 2a can be easily realized. By the combination with the gantry 71, the workspace of the ATL head 20 can be extended.

When the ATL head 20 is mounted on the gantry 71, compared to the case of mounting on an articulated robot, the following merits can be obtained. That is, the rigidity of the ATL head 20 can be enhanced, the pressing force by the ATL head 20 can be enhanced, and furthermore, the footprint of the ATL apparatus 10 (in other words, the space utilized thereby including the operation area of the overall apparatus) can be made smaller.

Using the ATL apparatus 10, since the gantry 71 has linear motion mechanisms each in the directions of X. Y, and Z axes and the X *θ* z-axis stage 73 rotating in the yaw (*θ* z) direction, and the parallel linkage 40 comprises four link parts 43, the configuration of the parallel linkage 40 can be simplified.

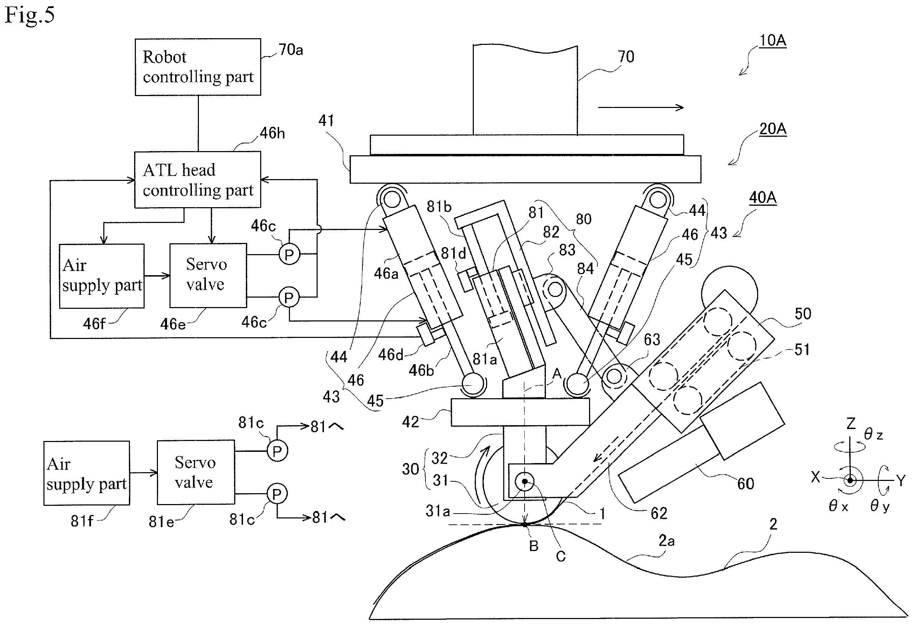

Fig. 5 is a schematic view showing a configuration example of an ATL head in an ATL apparatus according to a second embodiment. Components having the same functions as those in the ATL apparatus 10 according to the first embodiment shown in Figs. 1-3 are given the same reference signs, and they are not explained here.

An ATL apparatus 10A according to the second embodiment has an ATL head 20A, which is mounted on a handling robot 70.

The ATL head 20A has a pressing part 30 to press a tape 1 on a surface to be laid up 2a of a work 2, and a parallel linkage 40A which operates in a manner that allows a pressing position and/or a pressing attitude of the pressing part 30 to follow the form of the laid-up surface 2a.

The ATL head 20A is further provided with a rotating member 62 rotatably attached to the pressing part 30, whereby the feed angle of the tape 1 to the laid-up surface 2a can be adjusted, and a rotating motion part 80 suspending the rotating member 62 in a manner that enables the rotating member 62 to conduct a rotating motion, attached to the parallel linkage 40. The rotating motion part 80 is an example of the rotating motion unit.

The main components of the ATL apparatus 10A according to the second embodiment different from those of the ATL apparatus 10 according to the first embodiment are the rotating member 62 and the rotating motion part 80 mounted on the ATL head 20.

The parallel linkage 40Ahas a base part 41, an end part 42 to which the pressing part 30 is attached, and a plurality of link parts 43 arranged in parallel between the base part 41 and the end part 42. Each of the link parts 43 has adjustable joints 44 and 45 at both ends thereof, and an air cylinder 46 installed between these adjustable joints 44 and 45. On the end part 42 of the parallel linkage 40A, the rotating motion part 80 is arranged.

The pressing part 30 has a pressing roller 31 to press the tape 1 and a roller support part 32 attached to the end part 42 in the state of supporting the pressing roller 31.

The parallel linkage 40A is configured to be able to operate in a manner that allows the pressing position and/or the pressing attitude of the pressing roller 31 to follow the form of the laid-up surface 2a by individually controlling the length of each of the plurality of link parts 43 using the air cylinder 46 thereof so as to change the position (translation) and attitude (rotation) of the end part 42. The parallel linkage 40A may comprise, for example, four link parts 43, but the number of link parts 43 is not limited to that.

The rotating member 62 is arranged in such a manner that the center of rotation of the pressing roller 31 agrees with the center C of rotating motion of the rotating member 62. The rotating member 62 may be rotatably attached to a rotating shaft part 31a of the pressing roller 31, or rotatably attached to the roller support part 32.

The rotating member 62 is provided with a rotary joint 63 for being coupled to the rotating motion part 80, and a feeder 50 and a heating unit 60 are also mounted thereon. Here, the heating unit 60 is not an essential requirement. When heating processing on the tape 1 and the like is not required, the ATL head 20A may not be equipped with the heating unit 60. The operations of the feeder 50 and the heating unit 60 are controlled by an ATL head controlling part 46h. In another configuration example, the center of rotation of the pressing roller 31 may not agree with the center C of rotating motion of the rotating member 62.

The rotating motion part 80 has an air cylinder 81 erected on the end part 42 and directed toward the base part 41, a linear motion member 82 linearly moved vertically by the air cylinder 81, and a link arm 84, both ends of which are rotatably attached through a rotary joint 83 and the rotary joint 63 between the linear motion member 82 and the rotating member 62. The rotating motion part 80 is configured in such a manner that the linear motion of the linear motion member 82 by the air cylinder 81 is converted to the rotating motion of the rotating member 62 in the pitch ( *θ* x) direction through the link arm 84.

The air cylinder 81 has a cylinder part 81a to which air is supplied, a rod part 81b moving forward and rearward according to pressure in the cylinder part 81a, a pressure sensor 81c for detecting the pressure in the cylinder part 81a, and a displacement sensor 81d for detecting the displacement of the rod part 81b. The air cylinder 81 is arranged in the vicinity of the center portion of the end part 42 so as to be directed in a diagonally upward direction opposite to the direction from which the tape 1 is fed.

The cylinder part 81a is connected through the pressure sensor 81c to a servo valve 81e. The servo valve 81e regulates the inflow rate of air into the cylinder part 81a and the discharge rate thereof so as to control the differential pressure in two chambers of the cylinder part 81a. The servo valve 81e is connected to an air supply part 81f such as a compressor, which outputs compressed air.

As the displacement sensor 81d, anything can be adopted, as long as it can measure the amount of displacement of the rod part 81b. For example, it may be a magnetic or optical linear encoder, or a potentiometer. The pressure signal detected by the pressure sensor 81c and the displacement signal detected by the displacement sensor 81d are output to the ATL head controlling part 46h, respectively.

The ATL head controlling part 46h conducts driving control of the air cylinder 81 of the rotating motion part 80, as well as driving control of each air cylinder 46 of the parallel linkage 40A.

In the ATL head controlling part 46h, besides three-dimensional coordinate data of the laid-up surface 2a of the work 2, programs for controlling the operation of each part (such as the parallel linkage 40A, rotating motion part 80, feeder 50, and heating unit 60) of the ATL head 20A on the basis of the three-dimensional coordinate data, the pressure signal and displacement signal of each air cylinder 46, the pressure signal and displacement signal of the air cylinder 81, and the like are stored.

The ATL head controlling part 46h, for example, performs the processing to control the operation of the servo valve 46e of each air cylinder 46, using the detected signals acquired from the pressure sensor 46c and the displacement sensor 46d of each air cylinder 46 of the parallel linkage 40A as control parameters, so as to control the pressure in the cylinder part 46a of each air cylinder 46 and/or the displacement of the rod part 46b thereof. By such control processing, the position (translation) and attitude (rotation) of the end part 42 are changed, and the pressing position and/or the pressing attitude of the pressing roller 31 is controlled so as to follow the form of the laid-up surface 2a.

The ATL head controlling part 46h may be configured, for example, to calculate an index (an excess or a deficiency of pressure, or an excess or a deficiency of displacement) corresponding to a form error of the work 2, on the basis of the detected signals acquired from the pressure sensor 46c and the displacement sensor 46d of each air cylinder 46 of the parallel linkage 40A, so as to control the operation (pressure application operation or pressure reduction operation) of the servo valve 46e of each air cylinder 46 on the basis of the calculated index.

The ATL head controlling part 46h calculates the length (displacement) of the rod part 46b of each air cylinder 46 for realizing the target position and attitude of the end part 42 (that is, the position and attitude of the end part 42 for pressing the laid-up surface 2a by the pressing roller 31 in the direction orthogonal (normal) to the movement track based on the three-dimensional coordinate data of the work 2). And the ATL head controlling part 46h may store these calculated figures as a target figure of the length of the rod part 46b of each air cylinder 46, compare these stored target figures with output figures from the displacement sensor 46d of each air cylinder 46 in the layup operation, and conduct feedback control leading to the target figure. As the target figure, the length of the rod part 46b of each air cylinder 46 obtained by taking into account the form error of the work 2 may be selected.

The ATL head controlling part 46h may control each air cylinder 46 in a manner that moves the pressing roller 31 along a movement track designated on the basis of the three-dimensional coordinate data obtained by taking into account the form error of the work 2, so as to press the laid-up surface 2a in the direction of the normal thereto.

The ATL head controlling part 46h conducts operation control of the rotating motion part 80 and the rotating member 62, in coordination with operation control of the parallel linkage 40A.

The ATL head controlling part 46h, for example, using the detected signals acquired from the pressure sensor 81c and the displacement sensor 81d of the air cylinder 81 of the rotating motion part 80 as control parameters, conducts operation control of the servo valve 81e of the air cylinder 81 so as to conduct the processing to control the pressure in the cylinder part 81a of the air cylinder 81 and/or the displacement of the rod part 81b thereof.

By such control processing, as the liner motion member 82 attached to the rod part 81b of the air cylinder 81 vertically moves in a straight line, the rotating member 62 rotates through the link arm 84 in the pitch ( *θ* x) direction. As a result, the rotating member 62 moves to a position in which the feed angle of the tape 1 to the laid-up surface 2a at the layup point B is a prescribed angle.

When rotating (tilting) the attitude of the end part 42 of the parallel linkage 40A in the pitch direction, the ATL head controlling part 46h drives the air cylinder 81 of the rotating motion part 80 and conducts control to rotate the rotating member 62 in the pitch direction the same as the end part 42 in the state where the rotating motion part 80 suspends the rotating member 62 through the link arm 84.

By such control, the load of the moment generated when rotating the rotating member 62 with the feeder 50 and the heating unit 60 mounted thereon in the pitch direction is taken by the rotating motion part 80. The load of the moment taken by the end part 42 of the parallel linkage 40A can be substantially reduced, and it becomes possible to enhance the operation response property of the parallel linkage 40A.

By the above-described control of the parallel linkage 40A and the rotating motion part 80 conducted by the ATL head controlling part 46h, without clearance generated between the pressing roller 31 and the tape 1, and in the state of the feed angle of the tape 1 to the laid-up surface 2a kept fixed, the operation wherein the pressing roller 31 presses the laid-up surface 2a of the work 2 through the tape 1 in the direction orthogonal (normal) to the laid-up surface 2a thereof (direction A shown in Fig. 5) is realized. Here, the ATL head controlling part 46h may consist of a general-purpose computer. And the pressing direction by the pressing roller 31 is not limited to the direction normal to the laid-up surface 2a.

In this configuration example, the linear motion unit constituting the rotating motion part 80 consists of the air cylinder 81 driven by air pressure, but the linear motion unit adaptable to the present invention is not limited to the air cylinder 81. For example, a linear motion unit such as a hydraulic cylinder or an electrically powered cylinder can be adapted.

In the ATL apparatus 10A according to the second embodiment, the handling robot 70 on which the ATL head 20A is mounted consists of a gantry (an orthogonal coordinate mechanism) 71 shown in Fig. 2. The gantry 71 has an X-axis linear motion mechanism 72, a Y-axis linear motion mechanism 74, and a Z-axis linear motion mechanism 75, as described above.

Then, the operation in which the ATL apparatus 10A lays up the tape 1 on the work 2 is explained below.

Concerning the layup operation of the tape 1 using the ATL apparatus 10A, the translation movement of the work 2 in the X-axis direction is realized by the X-axis linear motion mechanism 72, while the Z-axis (yaw ( *θ* z) direction) rotation movement thereof is realized by an X *θ* z-axis stage 73. The translation movement of the ATL head 20A in the Y-axis direction is realized by the Y-axis linear motion mechanism 74, while the translation movement thereof in the Z-axis direction is realized by the Z-axis linear motion mechanism 75.

By the parallel linkage 40A of the ATL head 20A, at least the Y-axis (roll (*θ* y) direction) rotation movement and X-axis (pitch ( *θ* x) direction) rotation movement of the pressing roller 31 are realized. And by the rotating motion part 80 of the ATL head 20A, the X-axis (pitch ( *θ* x) direction) rotation movement of the rotating member 62 is realized.

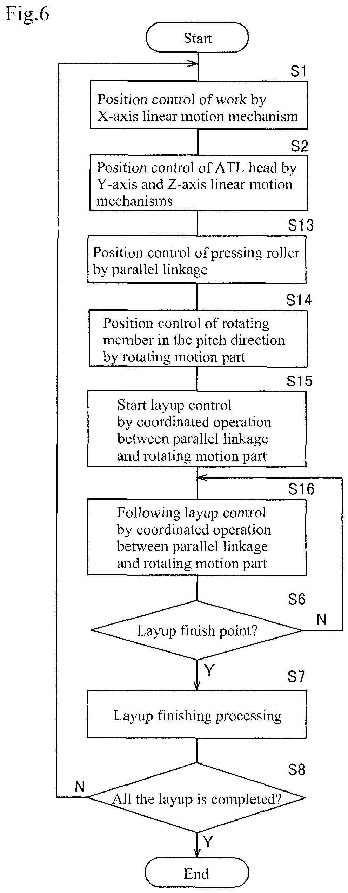

Fig. 6 is a flowchart showing an example of a layup processing operation conducted by a robot controlling part 70a and the ATL head controlling part 46h in the ATL apparatus 10A according to the second embodiment. Here, the same processing steps as those shown in the flowchart of Fig. 4 are given the same step numbers.

In step S1, the robot controlling part 70a operates the X-axis linear motion mechanism 72 of the gantry 71 so as to move the X *θ* z-axis stage 73 on which the work 2 is placed in the X-axis direction and conduct control of positioning the work 2 directly below a Y-axis guide part 74a of the Y-axis linear motion mechanism 74, and the processing goes to step S2.

In step S2, the robot controlling part 70a operates the Y-axis linear motion mechanism 74 and the Z-axis linear motion mechanism 75 of the gantry 71 so as to conduct control of moving the ATL head 20A to above a layup start point of the tape 1, and the processing goes to step S13.

In step S13, the ATL head controlling part 46h operates the parallel linkage 40A so as to conduct control of arranging the pressing roller 31 in a prescribed pressing state on the laid-up surface 2a at the layup start point, and the processing goes to step S14. The prescribed pressing state is, for example, a state of pressing in the direction orthogonal (normal) to the laid-up surface 2a.

In step S14, the ATL head controlling part 46h operates the rotating motion part 80 (the air cylinder 81, linear motion member 82, and link arm 84) so as to conduct position control of rotating the rotating member 62 in the pitch direction in such a manner that the feed angle of the tape 1 to the laid-up surface 2a becomes a prescribed angle, and the processing goes to step S15. Here, the processing in step S13 and the processing in step S14 may be conducted simultaneously.

In step S15, the ATL head controlling part 46h operates each part of the ATL head 20A (such as the parallel linkage 40A, air cylinder 81, feeder 50, and heating unit 60) in a coordinated manner so as to conduct processing of starting the layup control of the tape 1.

That is, as the ATL head controlling part 46h operates the feeder 50 to feed the tape 1 to between the pressing roller 31 and the laid-up surface 2a, heating processing by the heating unit 60 is started, and the tape 1 and/or the laid-up surface 2a starts to be heated.

And the ATL head controlling part 46h operates the parallel linkage 40A (as required, the gantry 71 may also be operated by the robot controlling part 70a), so as to start control of allowing the pressing roller 31 to press the tape 1 in a prescribed direction (e.g., a direction orthogonal) to the laid-up surface 2a.

Furthermore, the ATL head controlling part 46h drives the air cylinder 81 so as to start control of rotating the rotating member 62 in the pitch ( *θ* x) direction in such a manner that the angle of the tape 1 fed toward the laid-up surface 2a from the feeder 50 becomes a prescribed angle to the laid-up surface 2a at the layup point B, and the processing goes to step S16. The control of the parallel linkage 40A, air cylinder 81, feeder 50, and heating unit 60 by the ATL head controlling part 46h is simultaneously conducted.

In step S16, the ATL head controlling part 46h conducts operation control of the pressing position and the pressing attitude of the pressing roller 31 by the parallel linkage 40A of the ATL head 20A and rotating motion control of the rotating member 62 in the pitch ( *θ* x) direction by the air cylinder 81 in a coordinated manner. The robot controlling part 70a conducts operation control of the gantry 71 (the Y-axis linear motion mechanism 74, Z-axis linear motion mechanism 75, or the rotation of the X *θ* z-axis stage 73), so as to conduct the control of laying up the tape 1 on the laid-up surface 2a along a layup path of the tape 1 on the work 2 (following layup control). At this time, the parallel linkage 40A is operated in such a manner that the pressing position and/or the pressing attitude of the pressing roller 31 follows the form of the laid-up surface 2a of the work 2 (i.e., the pressing roller 31 presses in the direction of the normal thereto). The rotating member 62 is rotated in the pitch ( *θ* x) direction by the rotating motion part 80 in such a manner that the feed angle of the tape 1 becomes a prescribed angle to the laid-up surface 2a at the layup point B.

In step S6, the ATL head controlling part 46h judges whether the pressing roller 31 of the ATL head 20A reached a layup finish point of the tape 1 or not. When it is judged that it has not reached the layup finish point thereof yet, the following layup control processing in step S16 is continued. On the other hand, when it is judged that it reached the layup finish point thereof, the processing goes to step S7.

In step S7, the ATL head controlling part 46h conducts the layup finishing processing of the tape 1. That is, the ATL head controlling part 46h conducts control of cutting the tape 1 in a cutting part arranged in the feeder 50, stop control of the heating operation by the heating unit 60, and release control of the pressing operation by the pressing roller 31, so as to complete the layup of a roll (a line) of the tape 1.

In step S8, whether all the layup of the tape 1 on the laid-up surface 2a of the work 2 was completed or not is judged. When it is judged that all the layup has not been completed, the processing goes back to step S1, where the control of laying up the tape 1 side by side in sequence on the laid-up surface 2a of the work 2 is conducted. On the other hand, when it is judged that all the layup was completed, the processing is ended.

Here, in the above operation example, the operation of the ATL head 20A is controlled in such a manner that the tape 1 is laid up side by side in sequence on the laid-up surface 2a of the work 2, but the layup mode of the tape 1 on the laid-up surface 2a is not limited to this. For example, in another operation example, according to the quality specification of the molded article, the layup may be conducted in the state of the tape 1 overlapping an adjacent tape 1 thereto, or in the state of adjacent tapes 1 not overlapping each other (apart from each other at established intervals).

Using the ATL apparatus 10A according to the second embodiment, since the ATL head 20A has the parallel linkage 40A therein, the same effects as the ATL apparatus 10 according to the first embodiment can be obtained. And by rotating the rotating member 62 in the state of the rotating motion part 80 suspending the rotating member 62, it is possible to allow the tape 1 to be fed to the laid-up surface 2a at a fixed angle. Consequently, it is possible to save or reduce the control processing for adjusting the feed angle of the tape 1 by the operation of the parallel linkage 40A, and to simplify the control processing of the parallel linkage 40A.

Even when the feeder 50 and the heating unit 60 are mounted on the rotating member 62, resulting in the state of a heavy lift greatly overhanging laterally, since the rotating member 62 is suspended by the rotating motion part 80, the unbalanced weight of the ATL head 20A can be reduced, resulting in improved weight balance. Furthermore, the rotating motion part 80 is configured to take the load of the moment generated when rotating the rotating member 62 in the pitch direction, so that the moment the load of which is taken by each link part 43 of the parallel linkage 40A can be substantially reduced. Consequently, the response property of the control in which the parallel linkage 40A operates the pressing part 30 in a manner that follows the form of the laid-up surface 2a can be enhanced, and the layup performance of the tape 1 on the laid-up surface 2a can be further enhanced.

Using the ATL apparatus 10A, since the rotating motion part 80 is arranged on the end part 42, it is possible to prevent the weight balance of the parallel linkage 40A from being lost, so that a high operation precision of the parallel linkage 40A can be maintained.

Using the ATL apparatus 10A, since the rotating motion part 80 comprises the air cylinder 81 and the link arm 84, the rotating motion part 80 can be arranged in the limited space on the end part 42 with keeping out of the way of the operation of the parallel linkage 40A and have a compact configuration without being bulky. Since the linear motion of the linear motion member 82 by the air cylinder 81 is converted to the rotating motion of the rotating member 62 through the link arm 84, it is possible to allow the rotating member 62 to conduct the rotating motion with good response property according to the linear motion of the linear motion member 82, so that the adjustment of the feed angle of the tape 1 according to the form of the laid-up surface 2a can be conducted with high accuracy.

Using the ATL apparatus 10A, since the pressing roller 31 and the rotating member 62 are arranged in such a manner that the center of rotation of the pressing roller 31 agrees with the center C of rotating motion of the rotating member 62, it is possible to enhance the operation precision of adjusting the feed angle of the tape 1 to a prescribed angle in a manner that follows the form of the laid-up surface 2a.

The preferred embodiments of the present invention are described above, but they are just examples of the present invention in every point. It is needless to say that various modifications, alternations, or combinations of configurations without going out of the scope of the present invention are possible.

For example, in the first or second embodiment, the ATL head 20 or 20A is mounted on the Z-axis linear motion mechanism 75 of the gantry 71, but in another embodiment, the ATL head 20 or 20A may be mounted on the arm tip portion of an articulated robot. In the case of the articulated robot, movement errors in each joint (joint part) are likely to be accumulated, but in the case of the parallel linkage 40 or 40A, movement errors in each joint part are unlikely to be accumulated. Therefore, it is possible to complement the positioning accuracy of the articulated robot and to enhance the layup performance of the tape 1 on the laid-up surface 2a. By the combination with the articulated robot, it is possible to extend the workspace of the ATL head 20 or 20A.

In the first or second embodiment, the case in which a direct acting (telescopic) actuator such as the air cylinder 46 is used as the link part 43 of the parallel linkage 40 or 40A is explained, but in another embodiment, a parallel linkage can be equipped with a rotary actuator used as the link part 43.

### Industrial Applicability

The present invention is applicable to every field in which enhanced tape layup performance on a surface to be laid up is required, for example, the case of manufacturing a molded article having a three-dimensional form with a tape laid up on a surface thereof to be laid up.

### Description of Reference Signs

1: Tape
2: Work
2a: Surface to be laid up
10, 10A: ATL apparatus (tape layup apparatus)
20, 20A: ATL head (layup head)
30: Pressing part
31: Pressing roller
31a: Rotating shaft part
32: Roller support part
40, 40A: Parallel linkage
41: Base part
42: End part
43: Link part
44, 45: Adjustable joint
46: Air cylinder (actuator)
46a: Cylinder part
46b: Rod part
46c: Pressure sensor (pressure detecting part)
46d: Displacement sensor (displacement detecting part)
46e: Servo valve
46f: Air supply part
46g, 46h: ATL head controlling part
50: Feeder (tape feeder)
60: Heating unit
61: Mounting guide
62: Rotating member
63: Rotary joint
70: Handling robot
70a: Robot controlling part
71: Gantry
72: X-axis linear motion mechanism
72a: X-axis guide part
72b: X-axis slide table
73: X *θ* z-axis stage
74: Y-axis linear motion mechanism
74a: Y-axis guide part
74b: Y-axis slider
75: Z-axis linear motion mechanism
75a: Z-axis guide part
75b: Z-axis slider
75c: Z-axis bracket
76: ATL head mounting part (layup head mounting part)
80: Rotating motion part (rotating motion unit)
81: Air cylinder (linear motion unit)
81a: Cylinder part
81b: Rod part
81c: Pressure sensor
81d: Displacement sensor
81e: Servo valve
81f: Air supply part
82: Linear motion member
83: Rotary joint
84: Link arm
A: Direction of the normal
B: Layup point
C: Center of rotating motion

## Claims

1. A tape layup apparatus comprising a layup head for laying up with pressing a tape on a surface to be laid up, the layup head comprising:
a pressing part to press the tape on the surface to be laid up; and
a parallel linkage to operate in a manner that allows a pressing position and/or a pressing attitude of the pressing part to follow a form of the surface to be laid up.

2. The tape layup apparatus according to Claim 1, wherein the parallel linkage comprises:
a base part;
an end part to which the pressing part is attached; and
a plurality of link parts arranged in parallel between the base part and the end part, each of the link parts having
adjustable joints at both ends, and
an actuator installed between the adjustable joints, wherein
by individually controlling the length of each of the plurality of link parts using the actuator, the parallel linkage operates in a manner that allows the pressing position and/or the pressing attitude of the pressing part to follow the form of the surface to be laid up.

3. The tape layup apparatus according to Claim 2, wherein the pressing part comprises:
a pressing roller to press the tape; and
a roller support part attached to the end part in a state of supporting the pressing roller, the layup head further comprising:
at least one of a tape feeder to feed the tape and a heating unit to heat the tape and/or the surface to be laid up, wherein
on the roller support part, at least one of the tape feeder and the heating unit is mounted into a single unit.

4. The tape layup apparatus according to Claim 1, wherein the layup head further comprises:
a rotating member rotatably attached to the pressing part, which makes it possible to adjust a feed angle of the tape to the surface to be laid up; and
a rotating motion unit attached to the parallel linkage, which suspends the rotating member in a manner that enables the rotating member to conduct a rotating motion.

5. The tape layup apparatus according to Claim 4, wherein the parallel linkage comprises:
a base part;
an end part to which the pressing part is attached; and
a plurality of link parts arranged in parallel between the base part and the end part, each of the link parts having
adjustable joints at both ends, and
an actuator installed between the adjustable joints, wherein
the rotating motion unit is arranged on the end part, and
by individually controlling the length of each of the plurality of link parts using the actuator, the parallel linkage operates in a manner that allows the pressing position and/or the pressing attitude of the pressing part to follow the form of the surface to be laid up.

6. The tape layup apparatus according to Claim 5, wherein the rotating motion unit comprises:
a linear motion unit arranged on the end part, directed toward the base part; and
a link arm, both ends of which are rotatably attached between a linear motion member linearly moved by the linear motion unit and the rotating member, wherein
a linear motion of the linear motion member by the linear motion unit is converted to a rotating motion of the rotating member through the link arm.

7. The tape layup apparatus according to Claim 5 or 6, wherein the pressing part comprises:
a pressing roller to press the tape; and
a roller support part attached to the end part in a state of supporting the pressing roller, the layup head further comprising:
at least one of a tape feeder to feed the tape and a heating unit to heat the tape and/or the surface to be laid up, wherein
on the rotating member, at least one of the tape feeder and the heating unit is mounted, and
the pressing roller and the rotating member are arranged in such a manner that the center of rotation of the pressing roller and the center of rotating motion of the rotating member agree with each other.

8. The tape layup apparatus according to any one of Claims 2, 3, and 5-7, wherein the actuator is an air cylinder driven by air pressure.

9. The tape layup apparatus according to Claim 8, wherein the air cylinder comprises:
a cylinder part to which air is supplied;
a rod part moving forward and rearward according to pressure in the cylinder part;
a pressure detecting part to detect a pressure in the cylinder part; and
a displacement detecting part to detect a displacement of the rod part, wherein
the pressure in the cylinder part detected by the pressure detecting part and/or the displacement of the rod part detected by the displacement detecting part are controlled so as to allow the pressing position and/or the pressing attitude of the pressing part to follow the form of the surface to be laid up.

10. The tape layup apparatus according to any one of Claims 2, 3, and 5-9, wherein the base part of the parallel linkage is mounted on a gantry.

11. The tape layup apparatus according to Claim 10, wherein the gantry comprises:
an X-axis linear motion mechanism for moving a work having the surface to be laid up in an X-axis direction;
a Y-axis linear motion mechanism built in a Y-axis direction over the X-axis linear motion mechanism; and
a Z-axis linear motion mechanism supported by the Y-axis linear motion mechanism, having a layup head mounting part movable in a Z-axis direction, wherein
an X *θ* z-axis stage supporting the work rotatably in a yaw (*θ* z) direction is mounted on the X-axis linear motion mechanism,
the layup head is mounted on the layup head mounting part, and
the parallel linkage enables the pressing part to rotate at least in a roll (*θ* y) direction and in a pitch ( *θ* x) direction.

12. The tape layup apparatus according to any one of Claims 2, 3, and 5-9, wherein the base part of the parallel linkage is mounted on an articulated robot.

13. A tape layup method, which is a method for laying up the tape on the surface to be laid up using the tape layup apparatus according to any one of Claims 1-12, wherein
the tape is laid up on the surface to be laid up with controlling the parallel linkage in a manner that allows the pressing position and/or the pressing attitude of the pressing part to follow the form of the surface to be laid up.

14. The tape layup method, which is a method for laying up the tape on the surface to be laid up using the tape layup apparatus according to any one of Claims 4-7, wherein
while rotating the rotating member by the rotating motion unit so as to allow a feed angle of the tape to the surface to be laid up to be a prescribed angle,
the tape is laid up on the surface to be laid up with controlling the parallel linkage in a manner that allows the pressing position and/or the pressing attitude of the pressing part to follow the form of the surface to be laid up.
